# FASCICULE DE BREVET EUROPEEN

(11) **EP 2 095 009 B1**
(45) Date de publication et mention de la délivrance du brevet: **22.05.2013**
(21) Numéro de dépôt: 07858546.0
(22) Date de dépôt: 10.10.2007
(51) Int. Cl.: F17C 5/00, F17C 5/02, F17C 9/00, F17C 13/02

(54) **PROCÉDÉ ET STATION DE RAVITAILLEMENT EN HYDROGÈNE**
WASSERSTOFFFÜLLVERFAHREN UND -STATION
HYDROGEN FILLING METHOD AND STATION

(30) Priorité: 22.11.2006 FR 0655042
(43) Date de publication de la demande: 02.09.2009
(73) Titulaire: L'AIR LIQUIDE, Société Anonyme pour l'Etude et l'Exploitation des Procédés Georges Claude, 75007 Paris (FR)
(72) Inventeur: ALLIDIERES, Laurent, 38410 Saint Martin d'Uriage (FR)
(74) Mandataire: De Cuenca, Emmanuel Jaime
(86) Numéro de dépôt international: PCT/FR2007/052116
(87) Numéro de publication internationale: WO 2008/062117

(56) Documents cités:
- EP-A- 1 266 811
- WO-A-01/04984
- WO-A-01/44737
- WO-A-02/064395
- DE-A1- 10 311 955
- FR-A- 2 011 354
- US-B1- 6 354 088
- US-B1- 6 755 219

## Description

La présente invention concerne une station et un procédé de ravitaillement en hydrogène. Une station selon l'art antérieur est divulguée dans le document DE 103 11 955.

L'invention concerne plus particulièrement une station de ravitaillement en hydrogène, notamment pour le ravitaillement en hydrogène gazeux de réservoirs de véhicules, comprenant un réservoir source destiné à contenir de l'hydrogène liquéfié, une conduite de prélèvement d'hydrogène liquéfié du réservoir source vers au moins un poste utilisateur, une pompe cryogénique électrique disposée dans la conduite de prélèvement, une source d'énergie électrique connectée à la pompe cryogénique pour alimenter cette dernière en électricité.

Le stockage d'hydrogène liquéfié présente de nombreux avantages et notamment la relative simplicité de la compression de l'hydrogène liquide. En effet, la compression d'hydrogène liquide permet de diminuer les coûts de compression par rapport à une compression d'hydrogène gazeux. Ceci s'explique notamment par le fait qu'il est moins coûteux énergétiquement de comprimer un volume de liquide qu'un volume de gaz.

La génération d'une haute pression avec une pompe pour de l'hydrogène liquide permet de diviser d'un facteur cinq environ la consommation énergétique d'un système de ravitaillement par rapport à un système équivalent avec compresseur de gaz.

Les pertes par évaporation d'hydrogène liquide dans une telle pompe cryogénique peuvent être importantes dans le cas ou la pompe n'est pas utilisée de façon optimale. Cet hydrogène liquide est évacué hors de la chambre de compression avant d'être pompé, ceci afin de ne pas aspirer dans le cylindre de la pompe un mélange diphasique qui ferait chuter le rendement de la pompe conçue pour pomper du liquide exclusivement. L'hydrogène gazeux d'évaporation doit donc être évacué à relativement basse pression (pression d'aspiration).

Ces pertes par évaporation étant impossibles à supprimer, une pompe cryogénique génèrera toujours un débit de dégazage correspondant à une évaporation de liquide cryogénique dans le corps de la pompe.

Cette purge d'hydrogène gazeux est dans la plupart des cas mise à l'atmosphère ou re-comprimée avec un compresseur de gaz mais cela n'est pas satisfaisant en terme de bilan énergétique et cela complique l'installation.

Un but de la présente invention est de pallier tout ou partie des inconvénients de l'art antérieur relevés ci-dessus.

A cette fin, la station de ravitaillement en hydrogène selon l'invention, par ailleurs conforme à la définition générique qu'en donne le préambule ci-dessus, est essentiellement caractérisés en ce que la source d'énergie électrique comprend au moins une pile à combustible.

Par ailleurs, des modes de réalisation de l'invention peuvent comporter l'une ou plusieurs des caractéristiques suivantes :
- la station comprend un réservoir de dégazage relié fluidiquement à la pompe cryogénique via une ligne de dégazage, pour récupérer au moins une partie de l'hydrogène gazeux évaporé au sein de la pompe,
- le réservoir de dégazage comprend une sortie de prélèvement de gaz reliée via une conduite d'alimentation à une entrée d'alimentation en combustible de la pile,
- la conduite d'alimentation comprend un échangeur de chaleur destiné à réchauffer le gaz provenant du réservoir de dégazage et une vanne de contrôle du gaz admis vers l'entrée d'alimentation en carburant de la pile à combustible,
- la conduite d'alimentation comprend une soupape d'évacuation de gaz vers l'atmosphère en cas de surpression déterminée dans la conduite d'alimentation,
- la conduite de prélèvement d'hydrogène liquide du réservoir source comprend, disposés en aval de la pompe, un échangeur de chaleur destiné à réchauffer l'hydrogène prélevé et une vanne de régulation,
- la station comprend un organe de commutation et de régulation de la puissance électrique d'alimentation délivrée à la pompe relié d'une part une la sortie de puissance électrique de la pile à combustible et, d'autre part, à l'entrée d'alimentation électrique de la pompe, la source d'énergie électrique comprenant également un réseau de distribution d'électricité relié à l'organe de commutation et de régulation, ledit organe de commutation et de régulation étant conformé pour autoriser sélectivement l'alimentation électrique de la pompe par le réseau et/ou la pile à combustible ou un transfert de puissance électrique délivrée par la pile à combustible vers le réseau,
- la station comprend un organe de mesure et de contrôle de la pression au sein du réservoir source apte à augmenter ou diminuer la pression au sein de ce réservoir,
- la station comprend un dispositif de mesure du niveau de liquide dans le réservoir de dégazage relié à l'organe de mesure et de contrôle de la pression au sein du réservoir source, ledit organe de mesure et de contrôle de la pression au sein du réservoir source étant relié également à la vanne de contrôle du gaz admis vers la pile à combustible, pour contrôler son ouverture/fermeture en fonction du niveau mesuré de liquide dans le réservoir de dégazage,
- le réservoir source est situé sous le niveau du sol, par exemple enterré, la pompe étant située au niveau du réservoir source ou au-dessus de ce dernier,
- la pile à combustible génère un courant électrique continu et en ce que l'organe de commutation et de régulation de la puissance électrique d'alimentation délivrée à la pompe comprend un onduleur apte à convertir un courant continu en courant alternatif,
- la station de ravitaillement comprend également au un poste de ravitaillement en hydrogène liquéfié à partir du réservoir source, pour permettre le ravitaillement en hydrogène gazeux et/ou liquéfié simultanément ou non.

L'invention concerne également un procédé de ravitaillement en hydrogène, notamment pour le ravitaillement en hydrogène gazeux de réservoirs de véhicules, utilisant une station de ravitaillement comprenant un réservoir source destiné à contenir de l'hydrogène liquéfié (LH2), une conduite de prélèvement d'hydrogène liquéfié du réservoir source vers au moins un poste utilisateur, une pompe cryogénique électrique disposée dans la conduite de prélèvement, caractérisé en ce qu'il comporte une étape d'alimentation électrique de la pompe cryogénique par une pile à combustible.

Par ailleurs, des modes de réalisation de l'invention peuvent comporter l'une ou plusieurs des caractéristiques suivantes :
- le procédé comporte une étape de recyclage d'hydrogène gazeux vaporisé par la pompe pour l'alimentation en carburant de la pile à combustible,
- l'hydrogène gazeux vaporisé par la pompe transite et est stocké dans un réservoir tampon de dégazage situé entre la pompe et la pile à combustible et en ce que le procédé comporte :
   - une étape de mesure du niveau de liquide dans le réservoir de dégazage,
   - une étape de contrôle de la quantité de gaz admis à alimenter la pile à combustible en fonction du niveau de liquide mesuré dans le réservoir de dégazage.
- lorsque le niveau de liquide mesuré dans le réservoir de dégazage est supérieur à un premier seuil, la quantité de gaz admis à alimenter la pile à combustible est diminuée, et lorsque le niveau de liquide mesuré dans le réservoir de dégazage est inférieur à un second seuil, la quantité de gaz admis à alimenter la pile à combustible est augmentée,
- le procédé comporte une étape de mesure du niveau de liquide dans le réservoir de dégazage et une étape de contrôle de la pression d'aspiration de la pompe cryogénique pour maintenir un niveau de liquide déterminé dans le réservoir de dégazage,
- le procédé comporte une étape d'augmentation de la pression d'aspiration de la pompe lorsque le niveau de liquide mesuré dans le réservoir de dégazage est inférieur à une première consigne déterminée et une étape de diminution de la pression d'aspiration de la pompe lorsque le niveau de liquide mesuré dans le réservoir de dégazage est inférieur à une seconde consigne déterminée distincte ou égale à la première consigne,
- l'excédent de puissance électrique fournie par la pompe est renvoyée vers un réseau et/ou des systèmes électriques auxiliaires tels qu'un éclairage,
- lorsque la quantité de gaz admis à alimenter la pile à combustible dépasse un premier seuil haut prédéterminé, la pression dans le réservoir source est augmentée par incrémentation tant que la quantité de gaz admis à alimenter la pile à combustible ne redescend pas au-dessous d'un second seuil haut qui est inférieur au premier seuil haut,
- lorsque la quantité de gaz admis à alimenter la pile à combustible est inférieure à un premier seuil bas prédéterminé, la pression dans le réservoir source est diminuée par décrémentation tant que la quantité de gaz admis à alimenter la pile à combustible ne dépasse un second seuil bas qui est supérieur au premier seuil bas.

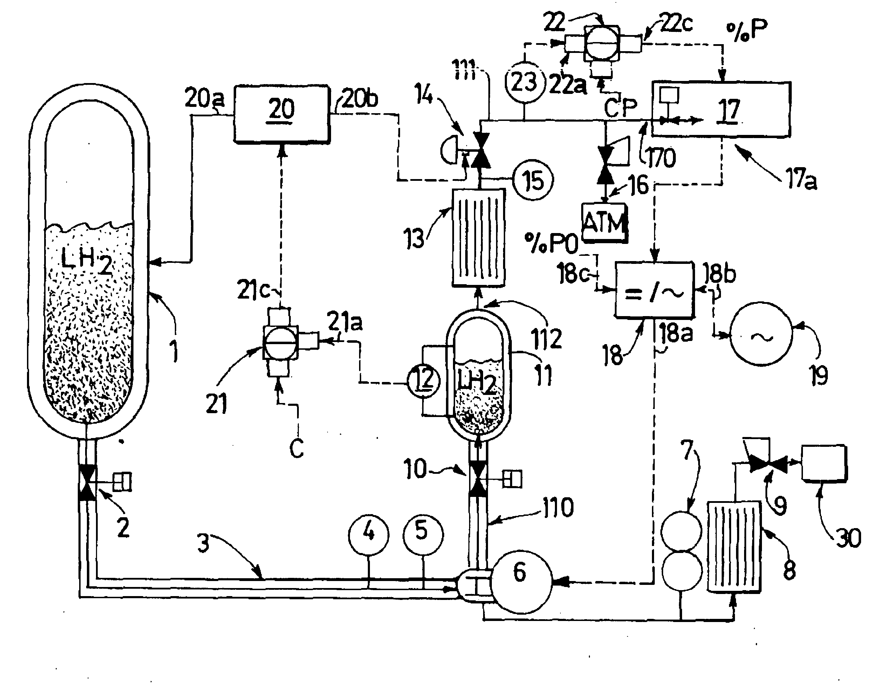

D'autres particularités et avantages apparaîtront à la lecture de la description ci-après, faite en référence à la figure unique représentant de façon schématique la structure et le fonctionnement d'un exemple de station ravitaillement en hydrogène selon l'invention.

La station comprend un poste utilisateur 30 d'hydrogène gazeux alimenté à partir d'un réservoir source 1 d'hydrogène liquéfié (LH2). L'hydrogène gazeux est acheminé du réservoir source 1 au poste utilisateur 30 via une conduite de prélèvement 3 d'hydrogène liquide (ligne isolée sous vide). La conduite de prélèvement 3 d'hydrogène liquide comprend d'amont en aval (c'est-à-dire du réservoir 1 source vers le poste utilisateur 30) : une vanne d'isolement 2 (optionnelle), des capteurs de température 4 et de pression 5 (optionnels), une pompe cryogénique haute pression 6, un capteur 7 de pression situé sur la ligne de refoulement de la pompe 6, un échangeur 8 (vaporisateur haute pression) pour vaporiser l'hydrogène liquide en gaz et une vanne 9 de régulation haute pression.

La pompe 6 est reliée via une ligne 110 de dégazage et une vanne 10 d'isolement (optionnelle), à un réservoir 11 de dégazage destiné à recueillir le mélange diphasique d'hydrogène liquide-gaz généré par la pompe 6. La pompe cryogénique 6 comprime l'hydrogène liquide provenant du réservoir source 1. Du fait notamment des frottements dans la pompe 6, une partie du fluide est évacué à basse pression sous forme de liquide diphasique via la ligne 110 dans le réservoir de dégazage 11.

Une sortie 112 de gaz du réservoir 11 de dégazage est reliée à l'entrée 170 d'alimentation d'une pile à combustible 17 via une conduite d'alimentation 111.

La conduite d'alimentation 111 comprend, d'amont en aval, un échangeur de chaleur 13 (vaporisateur basse pression), un premier capteur de pression 15 une vanne 14 de contrôle de dégazage, un second capteur de pression 23 et une dérivation vers l'atmosphère ATM contrôlée par une vanne 16 formant soupape de surpression de sécurité.

Un Régulateur 22 Proportionnel Intégral Dérivé (PID) de contrôle de la puissance de la pile à combustible 17 reçoit en entrée :
- la mesure de pression 22a d'hydrogène gazeux réalisée par le second capteur de pression 23, et
- une consigne CP de contrôle de la puissance électrique de la pile à combustible 17.

Le Régulateur 22 délivre en sortie 22c un signal de commande de la puissance électrique instantanée de la pile à combustible 17 (par exemple en pourcentage %P de la puissance nominale de la pile compris entre 0-100%).

Un capteur 12 de niveau de liquide dans le réservoir dégazeur 11 est relié à un Régulateur Proportionnel Intégral Dérivé (PID) de contrôle dudit niveau dans ce réservoir dégazeur 11. Le Régulateur 21 Proportionnel Intégral Dérivé de contrôle du niveau reçoit en entrée 21a le niveau de liquide mesuré et une consigne C de contrôle du niveau de liquide au sein du réservoir dégazeur 11.

La sortie 17a de puissance électrique de la pile à combustible 17 est reliée 18a à l'entrée d'alimentation électrique de la pompe 6 via 17a un organe 18 de commutation et de régulation de la puissance électrique. L'organe 18 de commutation et de régulation de la puissance électrique est connecté également par une ligne 18b à un réseau 19 électrique et reçoit en entrée 18c une consigne %PO de puissance d'aspiration de la pompe 6.

Un dispositif 20 de mesure et de contrôle de la pression dans le réservoir source 1 (ligne 20a de mise en pression ou en dépression) est relié au Régulateur 21 Proportionnel Intégral Dérivé de contrôle du niveau dans le réservoir dégazeur 11.

Plus précisément, le signal de sortie 21c du régulateur 21 de contrôle du niveau du réservoir 11 de dégazage est transmis au dispositif 20 de mesure et de contrôle de la pression dans le réservoir source 1.

Le dispositif 20 de mesure et de contrôle de la pression dans le réservoir source 1 peut commander également la vanne 14 de contrôle de dégazage en adressant à celle-ci un signal 20b de consigne d'ouverture.

Dans le cas nominal, le signal de sortie 21c du régulateur 21 est par exemple le pourcentage (%) d'ouverture de la vanne 14 de contrôle de dégazage.

Un exemple de fonctionnement est décrit ci-après :

L'hydrogène liquéfié stocké à une pression déterminée et à la température inférieure à la température de saturation correspondante est fourni par le réservoir source 1 par l'intermédiaire de la ligne isolée sous vide 3 comprenant la vanne d'isolement 2. L'hydrogène liquide haute pression est évacué par pompe 6.

La pression de l'hydrogène liquide est mesurée par le capteur 7, puis l'hydrogène liquide est réchauffé par l'échangeur 8. L'hydrogène gazeux à haute pression est délivré par la vanne de régulation de la pression amont 9. L'utilisation de l'hydrogène gazeux, par exemple à des pressions de l'ordre de 700 bar est disponible en aval de cette vanne 9.

Une partie du fluide utilisé par la pompe 6 est évacué à basse pression sous forme de liquide diphasique (gaz-liquide) via la ligne 110 de dégazage et la vanne 10 vers le réservoir dégazeur 11.

La pression d'aspiration de la pompe 6 est contrôlée de façon à ce que du liquide soit toujours présent dans le réservoir dégazeur 11. Le réservoir dégazeur 11 est situé en charge sur la pompe 6. C'est-à-dire que le bain d'aspiration de la pompe 6 est toujours sous atmosphère d'hydrogène liquide (essentiellement sans gaz). Cela évite tout risque de cavitation dans la pompe 6.

L'échangeur 13 en aval du réservoir dégazeur 11 permet de réchauffer le gaz provenant de l'évaporation du liquide dans la pompe 6.

La vanne 14 de contrôle de dégazage permet de recirculer l'hydrogène gazeux vers la pile à combustible 17 (par exemple de type PEM).

La pile 17 créé alors un courant continu 17a qui est ondulé par l'organe 8 de commutation et de régulation électrique. En fonction de la consigne de puissance pour la pompe %PO donnée par le signal 18c de commande de la pompe 6, l'onduleur 18 peut éventuellement compléter la puissance électrique fournie par la pile 17 par un complément de puissance 18b électrique fourni par le réseau électrique 19. De même, en fonction de la consigne de puissance pour la pompe %PO l'onduleur 18 peut éventuellement fournir au réseau électrique un complément de puissance 18b produit par la pile à combustible (17).

En cas de non fonctionnement de la pile à combustible 17 (panne ou arrêt par exemple), ou en cas d'excès d'hydrogène gazeux disponible, la vanne 16 formant soupape de sécurité peut canaliser l'hydrogène gazeux en excès vers l'atmosphère ATM.

Le dispositif 20 de mesure et de contrôle de la pression dans le réservoir source 1 peut fonctionner de la manière suivante : le dispositif 20 de mesure et de contrôle reçoit l'information du régulateur 21 PID qui cherche à contrôler le niveau de liquide dans le réservoir 11 de dégazage. Si le niveau de liquide est supérieur à la consigne C, le signal de sortie 21c du régulateur 21 diminue. Si le niveau de liquide est inférieur à la consigne C, le signal 21c de sortie du régulateur 21 augmente. En marche normale, le signal 20b de consigne d'ouverture de la vanne 14 de contrôle du gaz peut être une simple recopie du signal 21 c de sortie du régulateur 21.

Si le signal de sortie 21 c du régulateur 21 est égal à 100% (niveau de liquide très bas nécessitant une ouverture maximale de la vanne 14 de contrôle du gaz) alors la consigne de contrôle 20a) de la pression du réservoir source 1 est augmentée par exemple par incrément de 100 mbar toutes les 30 secondes jusqu'à ce que le signal 21c de commande de sortie du régulateur 21 soit inférieur à une valeur plus basse (par exemple 90%).

Si le signal 21c de sortie du régulateur 21 est égal à 0% (niveau de liquide maxi et fermeture de la vanne 14 de contrôle de gaz), alors la consigne de contrôle 20a de la pression du réservoir source 1 est diminuée par exemple par incrément de 100 mbar toutes les 30 secondes jusqu'à ce que le signal 21c de sortie du régulateur 21 soit supérieur à une valeur prédéfinie (par exemple 10%).

L'échappement de gaz via la vanne de contrôle 14 est alors collecté vers la pile à combustible 17. Ceci permet via le signal de puissance électrique 17a, 18a d'alimenter la pompe 6. De cette façon il est possible de diminuer voir d'annuler la contribution 18b et la dépendance de la station vis-à-vis du réseau électrique 19.

En cas d'excès de puissance électrique, l'électricité produite par la pile 17 peut être renvoyée vers le réseau 19 et/ou vers des systèmes auxiliaires de la station tels que magasins, éclairage. Ceci peut rendre la station de ravitaillement complètement autonome en énergie électrique.

La gestion de l'alimentation peut être conçue de la manière suivante : la pile à combustible 17 reçoit par défaut tout l'hydrogène dégazé du réservoir 11 de dégazage et produit de l'électricité à partir de cet hydrogène recyclé. Si la quantité d'hydrogène dégazé est trop importante par rapport à la puissance nominale P de la pile à combustible, alors la pression mesurée par le second capteur 23 augmente et la vanne de mise à l'air 16 est ouverte. De même, si la pile 17 est à l'arrêt, la vanne 16 peut mettre à l'atmosphère la totalité de l'hydrogène dégazé du réservoir 11.

L'électricité produite par la pile 17 est envoyée le cas échéant vers l'onduleur de l'organe 18 de commutation et de régulation. En fonction :
- du courant reçu 17a,
- de la consigne de puissance de la pompe %PO, 18c et
- du courant 18a nécessaire pour faire fonctionner la pompe 6 en accord avec la consigne %PO,
l'organe 18 de commutation et de régulation distribue du courant électrique vers le réseau électrique 19 ou en tire de ce dernier.

Le réservoir 1 source peut être situé sous le niveau du sol (enterré). La pompe 6 peut être située au-dessus du réservoir, grâce au dispositif 20 de mesure et de contrôle de la pression dans le réservoir source 1 (faisant office de bloc de régulation dynamique).

Ainsi, tout en étant de structure simple et peu coûteuse, l'invention présente de nombreux avantages par rapport à l'art antérieur. Ainsi, l'invention permet de valoriser avantageusement l'hydrogène vaporisé à l'intérieur des pompes cryogéniques sans nécessiter de compression.

Les transferts de puissance de la pompe 6 vers le fluide du fait des frottements et analogues sont compris généralement entre 8 et 21% de la puissance totale de la pompe.

De simples calculs thermodynamiques montrent que, en prenant en compte des rendements de moteurs, convertisseurs et embiellages de 95% (unitaire), l'énergie apportée par le gaz évaporé puis transformé en électricité dans une pile à combustible avec un rendement de l'ordre de 0.6 Nm³/kWh est situé entre 287% et 589% de la puissance électrique de la pompe 6.

La pile à combustible 17 peut donc d'une part fournir l'électricité pour alimenter la pompe 6, mais l'excédent d'électricité obtenu peut aussi alimenter un réseau électrique 19 ou d'autres utilisateurs.

De cette façon, l'hydrogène assure pleinement sa fonction de vecteur énergétique et peut rendre complètement autonome en énergie électrique la station de ravitaillement entière. La station peut donc être insensible aux coupures de courant notamment.

L'invention permet donc de valoriser habilement dans une pile à combustible les pertes de gaz d'évaporation

## Revendications

1. Station de ravitaillement en hydrogène, notamment pour le ravitaillement en hydrogène gazeux de réservoirs de véhicules, comprenant un réservoir source (1) destiné à contenir de l'hydrogène liquéfié (LH2), une conduite de prélèvement (3) d'hydrogène liquéfié du réservoir source (1) vers au moins un poste (30) utilisateur, une pompe cryogénique (6) électrique disposée dans la conduite de prélèvement (3), une source d'énergie électrique (19, 17) connectée à la pompe cryogénique (6) pour alimenter cette dernière en électricité la source d'énergie électrique comprenant au moins une pile à combustible (17), et **caractérisée en ce que** la station comprend un réservoir de dégazage (11) relié fluidiquement à la pompe cryogénique (6) via une ligne (110) de dégazage, pour récupérer au moins une partie de l'hydrogène gazeux évaporé au sein de la pompe (6).

2. Station de ravitaillement selon la revendication 1, **caractérisée en ce que** le réservoir de dégazage (11) comprend une sortie (112) de prélèvement de gaz reliée via une conduite d'alimentation (111) à une entrée (170) d'alimentation en combustible de la pile (17).

3. Station de ravitaillement selon la revendication 2, **caractérisée en ce que** la conduite d'alimentation (111) comprend un échangeur de chaleur (13) destiné à réchauffer le gaz provenant du réservoir de dégazage (11) et une vanne (14) de contrôle du gaz admis vers l'entrée (170) d'alimentation en carburant de la pile à combustible (17).

4. Station de ravitaillement selon la revendication 2 ou 3, **caractérisée en ce que** la conduite d'alimentation (111) comprend une soupape (16) d'évacuation de gaz vers l'atmosphère en cas de surpression déterminée dans la conduite d'alimentation (111).

5. Station de ravitaillement selon l'une quelconque des revendications précédentes, **caractérisée en ce que** la conduite de prélèvement (3) d'hydrogène liquide du réservoir source (1) comprend, disposés en aval de la pompe (6), un échangeur de chaleur (8) destiné à réchauffer l'hydrogène prélevé et une vanne (9) de régulation.

6. Station de ravitaillement selon l'une quelconque des revendications précédentes, **caractérisée en ce qu'**elle comprend un organe (18) de commutation et de régulation de la puissance électrique d'alimentation délivrée à la pompe (6) relié d'une part une la sortie (17a) de puissance électrique de la pile à combustible (17) et, d'autre part, à l'entrée d'alimentation électrique de la pompe (6), la source d'énergie électrique (19, 17) comprenant également un réseau (19) de distribution d'électricité relié à l'organe (18) de commutation et de régulation, ledit organe (18) de commutation et de régulation étant conformé pour autoriser sélectivement l'alimentation électrique de la pompe (6) par le réseau (19) et/ou la pile à combustible (17) ou un transfert de puissance électrique délivrée par la pile à combustible (17) vers le réseau (19).

7. Station de ravitaillement selon l'une quelconque des revendications précédentes, **caractérisée en ce qu'**elle comprend un organe (20) de mesure et de contrôle de la pression au sein du réservoir source (1) apte à augmenter ou diminuer la pression au sein de ce réservoir (1).

8. Station de ravitaillement selon la revendication 7 prise en combinaison avec la revendication 4, **caractérisée en ce qu'**elle comprend un dispositif (12) de mesure du niveau de liquide dans le réservoir de dégazage (11) relié à l'organe (20) de mesure et de contrôle de la pression au sein du réservoir source (1), ledit organe (20) de mesure et de contrôle de la pression au sein du réservoir source (1) étant relié également à la vanne (14) de contrôle du gaz admis vers la pile à combustible, pour contrôler son ouverture/fermeture en fonction du niveau mesuré de liquide dans le réservoir de dégazage (11).

9. Procédé de ravitaillement en hydrogène, notamment pour le ravitaillement en hydrogène gazeux de réservoirs de véhicules, utilisant une station de ravitaillement comprenant un réservoir source (1) destiné à contenir de l'hydrogène liquéfié (LH2), une conduite de prélèvement (3) d'hydrogène liquéfié du réservoir source (1) vers au moins un poste (30) utilisateur, une pompe cryogénique (6) électrique disposée dans la conduite de prélèvement (3), le procédé comprenant une étape d'alimentation électrique de la pompe (6) cryogénique par une pile à combustible, (6) et **caractérisé en ce qu'**il comporte une étape de recyclage d'hydrogène gazeux vaporisé par la pompe (6) pour l'alimentation en carburant de la pile à combustible (17).

10. Procédé selon la revendication 9, **caractérisé en ce que** l'hydrogène gazeux vaporisé par la pompe (6) transite et est stocké dans un réservoir tampon de dégazage (11) situé entre la pompe (6) et la pile à combustible (17) et **en ce que** le procédé comporte :
- une étape de mesure du niveau de liquide dans le réservoir de dégazage (11),
- une étape de contrôle de la quantité de gaz admis à alimenter la pile à combustible (17) en fonction du niveau de liquide mesuré dans le réservoir de dégazage (11).

11. Procédé selon la revendication 10, **caractérisé en ce que** lorsque le niveau de liquide mesuré dans le réservoir de dégazage (11) est supérieur à un premier seuil, la quantité de gaz admis à alimenter la pile à combustible (17) est diminuée, et lorsque le niveau de liquide mesuré dans le réservoir de dégazage (11) est inférieur à un second seuil, la quantité de gaz admis à alimenter la pile à combustible (17) est augmentée.

12. Procédé selon l'une la revendication 10 ou 11, **caractérisé en ce qu'**il comporte une étape de mesure du niveau de liquide dans le réservoir de dégazage (11) et une étape de contrôle de la pression d'aspiration de la pompe (6) cryogénique pour maintenir un niveau de liquide déterminé dans le réservoir de dégazage (11).

13. Procédé selon la revendication 12, **caractérisé en ce qu'**il comporte une étape d'augmentation de la pression d'aspiration de la pompe (6) lorsque le niveau de liquide mesuré dans le réservoir de dégazage (11) est inférieur à une première consigne déterminée et une étape de diminution de la pression d'aspiration de la pompe (6) lorsque le niveau de liquide mesuré dans le réservoir de dégazage (11) est inférieur à une seconde consigne déterminée distincte ou égale à la première consigne.

## Patentansprüche

1. Wasserstofftankstelle, insbesondere zum Auftanken von Fahrzeugtanks mit gasförmigem Wasserstoff, umfassend einen Ausgangstank (1), der dazu gedacht ist, verflüssigten Wasserstoff (LH2) zu enthalten, eine Leitung (3) zum Abzapfen von verflüssigtem Wasserstoff aus dem Ausgangstank (1) für mindestens eine Verbraucherstation (30), eine elektrische Kryopumpe (6), die in der Zapfleitung (3) angeordnet ist, eine elektrische Energiequelle (19, 17), die an die Kryopumpe (6) angeschlossen ist, um diese mit Strom zu versorgen, wobei die elektrische Energiequelle mindestens eine Brennstoffzelle (17) umfasst, **dadurch gekennzeichnet, dass** die Tankstelle einen Entgasungstank (11) umfasst, der über eine Entgasungsleitung (110) fluidtechnisch mit der Kryopumpe (6) verbunden ist, um mindestens einen Teil des gasförmigen Wasserstoffs wiederzugewinnen, der innerhalb der Pumpe (6) verdampft ist.

2. Tankstelle nach Anspruch 1, **dadurch gekennzeichnet, dass** der Entgasungstank (11) einen Gasabzapfausgang (112) umfasst, der über eine Versorgungsleitung (111) mit einem Eingang (170) zum Versorgen der Zelle (17) mit Brennstoff umfasst.

3. Tankstelle nach Anspruch 2, **dadurch gekennzeichnet, dass** die Versorgungsleitung (111) einen Wärmetauscher (13) umfasst, der dazu gedacht ist, das Gas wieder aufzuwärmen, das aus dem Entgasungstank (11) stammt, und einen Schieber (14) zum Regeln des Gases, das zum Eingang (170) zum Versorgen der Brennstoffzelle (17) mit Kraftstoff eingelassen wird.

4. Tankstelle nach Anspruch 2 oder 3, **dadurch gekennzeichnet, dass** die Versorgungsleitung (111) ein Ventil (16) zum Ablassen von Gas in die Atmosphäre umfasst, falls ein Überdruck in der Versorgungsleitung (111) festgestellt wird.

5. Tankstelle nach einem der vorhergehenden Ansprüche, **dadurch gekennzeichnet, dass** die Leitung (3) zum Abzapfen von flüssigem Wasserstoff aus dem Ausgangstank (1) stromabwärts von der Pumpe (6) angeordnet einen Wärmetauscher (8), der dazu gedacht ist, den abgezapften Wasserstoff zu erhitzen, und einen Regulierungsschieber (9) umfasst.

6. Tankstelle nach einem der vorhergehenden Ansprüche, **dadurch gekennzeichnet, dass** sie ein Element (18) zum Umschalten und Regulieren der elektrischen Versorgungsleistung umfasst, die an die Pumpe (6) abgegeben wird, wobei das Element einerseits mit dem elektrischen Leistungsausgang (17a) der Brennstoffzelle (17) und andererseits mit dem elektrischen Versorgungseingang der Pumpe (6) verbunden ist, wobei die elektrische Energiequelle (19, 17) auch ein Stromverteilungsnetz (19) umfasst, das mit dem Umschalt- und Regulierungselement (18) verbunden ist, wobei das Umschalt- und Regulierungselement (18) ausgestaltet ist, um selektiv die elektrische Versorgung der Pumpe (6) über das Netz (19) und/oder die Brennstoffzelle (17) oder eine elektrische Leistungsübertragung, die von der Brennstoffzelle (17) an das Netz (19) abgegeben wird, zu erlauben.

7. Tankstelle nach einem der vorhergehenden Ansprüche, **dadurch gekennzeichnet, dass** sie ein Element (20) zum Messen und Regeln des Drucks innerhalb des Ausgangstanks (1) umfasst, das dazu geeignet ist, um den Druck in diesem Tank (1) zu erhöhen oder zu erniedrigen.

8. Tankstelle nach Anspruch 7 kombiniert mit Anspruch 4, **dadurch gekennzeichnet, dass** sie eine Vorrichtung (12) zum Messen des Flüssigkeitsstandes in dem Entgasungstank (11) umfasst, die mit dem Element (20) zum Messen und Regeln des Drucks in dem Ausgangstank (1) verbunden ist, wobei das Element (20) zum Messen und Regeln des Drucks in dem Ausgangstank (1) auch mit dem Schieber (14) zum Regeln des Gases, das in die Brennstoffzelle eingelassen wird, verbunden ist, um seine Öffnung/Schließung in Abhängigkeit von dem gemessenen Flüssigkeitsstand in dem Entgasungstank (11) zu steuern.

9. Verfahren zum Auftanken von Wasserstoff, insbesondere für das Auftanken von Fahrzeugtanks mit gasförmigem Wasserstoff unter Verwendung einer Tankstelle umfassend einen Ausgangstank (1), der dazu gedacht ist, verflüssigten Wasserstoff (LH2) zu enthalten, eine Leitung (3) zum Abzapfen von verflüssigtem Wasserstoff aus dem Ausgangstank (1) für mindestens eine Verbraucherstation (30), eine elektrische Kryopumpe (6), die in der Zapfleitung (3) angeordnet ist, wobei das Verfahren einen Schritt des elektrischen Versorgens der Kryopumpe (6) durch eine Brennstoffzelle umfasst, **dadurch gekennzeichnet, dass** es einen Schritt des Wiederverwertens von gasförmigem Wasserstoff umfasst, der durch die Pumpe (6) für die Kraftstoffversorgung der Brennstoffzelle (17) verdampft wird.

10. Verfahren nach Anspruch 9, **dadurch gekennzeichnet, dass** der gasförmige Wasserstoff, der durch die Pumpe (6) verdampft wird, durch einen Entgasungszwischentank (11), der sich zwischen der Pumpe (6) und der Brennstoffstelle (17) befindet, geht und darin gespeichert wird, und dass das Verfahren folgende Schritte umfasst:
- Messen des Flüssigkeitsstandes in dem Entgasungstank (11),
- Regeln der Gasmenge, die eingelassen wird, um die Brennstoffzelle (17) in Abhängigkeit von dem Flüssigkeitsstand zu versorgen, der in dem Entgasungstank (11) gemessen wird.

11. Verfahren nach Anspruch 10, **dadurch gekennzeichnet, dass**, wenn der gemessene Flüssigkeitsstand in dem Entgasungstank (11) höher als ein erster Schwellenwert ist, die Gasmenge, die eingelassen wird, um die Brennstoffzelle (17) zu versorgen, verringert wird, und wenn der Flüssigkeitsstand, der in dem Entgasungstank (11) gemessen wird, niedriger als ein zweiter Schwellenwert ist, die Gasmenge, die eingelassen wird, um die Brennstoffzelle (17) zu versorgen, erhöht wird.

12. Verfahren nach einem der Ansprüche 10 oder 11, **dadurch gekennzeichnet, dass** es einen Schritt des Messens des Flüssigkeitsstandes in dem Entgasungstank (11) und einen Schritt des Regelns des Ansaugdrucks der Kryopumpe (6) umfasst, um einen Flüssigkeitsstand zu bewahren, der in dem Entgasungstank (11) festgestellt wird.

13. Verfahren nach Anspruch 12, **dadurch gekennzeichnet, dass** es einen Schritt des Erhöhens des Ansaugdrucks der Pumpe (6) umfasst, wenn der Flüssigkeitsstand, der in dem Entgasungstank (11) gemessen wird, niedriger ist als ein erster bestimmter Sollwert, und einen Schritt des Verringerns des Ansaugdrucks der Pumpe (6) umfasst, wenn der Flüssigkeitsstand, der in dem Entgasungstank (11) gemessen wird, niedriger als ein zweiter bestimmter Sollwert ist, der anders als oder gleich dem ersten Sollwert ist.

## Claims

1. Hydrogen refuelling station, particularly for refuelling vehicle tanks with hydrogen gas, comprising a source tank (1) intended to contain liquefied hydrogen (LH2), a pipe (3) for withdrawing liquefied hydrogen from the source tank (1) to at least one user point (30), an electric cryogenic pump (6) positioned in the withdrawing pipe (3), an electric energy source (19, 17) connected to the cryogenic pump (6) to supply said pump with electricity, the electric energy source comprising at least one fuel cell (17), and **characterised in that** the station comprises a degassing tank (11) in fluid communication with the cryogenic pump (6) via a degassing line (110) in order to recover at least some of the hydrogen gas that has evaporated within the pump (6).

2. Refuelling station according to claim 1, **characterised in that** the degassing tank (11) comprises a gas withdrawal outlet (112) connected via a supply pipe (111) to a fuel supply inlet (170) of the cell (17).

3. Refuelling station according to claim 2, **characterised in that** the supply pipe (111) comprises a heat exchanger (13) intended to heat the gas from the degassing tank (11), and a control valve (14) for controlling the gas admitted to the fuel supply inlet (170) of the fuel cell (17).

4. Refuelling station according to either claim 2 or claim 3, **characterised in that** the supply pipe (111) comprises a discharge valve (16) that discharges gas to the atmosphere in the event of a set overpressure in the supply pipe (111).

5. Refuelling station according to any of the preceding claims, **characterised in that** the pipe (3) for withdrawing liquid hydrogen from the source tank (1) comprises, positioned downstream of the pump (6), a heat exchanger (8) intended to heat up the withdrawn hydrogen, and a regulating valve (9).

6. Refuelling station according to any of the preceding claims, **characterised in that** it comprises a member (18) for switching and regulating the electric supply power delivered to the pump (6), this member being connected, on one hand, to an electric power output (17a) of the fuel cell (17) and, on the other hand, to the electric supply input of the pump (6), the electric energy source (19, 17) also comprising an electricity distributing network (19) connected to the switching and regulating member (18), said switching and regulating member (18) being designed to allow selectively the pump (6) to be electrically powered by the network (19) and/or the fuel cell (17) or electrical power delivered by the fuel cell (17) to be transferred to the network (19).

7. Refuelling station according to any of the preceding claims, **characterised in that** it comprises a member (20) for measuring and controlling the pressure within the source tank (1) and capable of increasing or decreasing the pressure within this tank (1).

8. Refuelling station according to claim 7 in combination with claim 4, **characterised in that** it comprises a device (12) for measuring the level of liquid in the degassing tank (11), this device being connected to the member (20) for measuring and controlling the pressure within the source tank (1), said member (20) for measuring and controlling the pressure within the source tank (1) also being connected to the valve (14) for controlling the gas admitted to the fuel cell, so as to control the opening/closure of this valve according to the measured level of liquid in the degassing tank (11).

9. Hydrogen refuelling method, particularly for refuelling vehicle tanks with hydrogen gas, using a refuelling station comprising a source tank (1) intended to contain liquefied hydrogen (LH2), a pipe (3) for withdrawing liquefied hydrogen from the source tank (1) to at least one user station (30), an electric cryogenic pump (6) positioned in the withdrawing pipe (3), the method comprising a step in which the cryogenic pump (6) is electrically powered by a fuel cell (6), and **characterised in that** it comprises a step in which hydrogen gas vaporised by the pump (6) is recirculated to supply the fuel cell (17) with fuel.

10. Method according to claim 9, **characterised in that** the hydrogen gas vaporised by the pump (6) passes through and is stored in a buffer degassing tank (11) situated between the pump (6) and the fuel cell (17), and **in that** the method comprises:
- a step of measuring the level of liquid in the degassing tank (11), and
- a step of controlling the amount of gas admitted to supply the fuel cell (17) according to the level of liquid measured in the degassing tank (11).

11. Method according to claim 10, **characterised in that**, when the liquid level measured in the degassing tank (11) is above a first threshold level, the amount of gas admitted to supply the fuel cell (17) is decreased, and when the liquid level measured in the degassing tank (11) is below a second threshold level, the amount of gas admitted to supply the fuel cell (17) is increased.

12. Method according to either claim 10 or claim 11, **characterised in that** it comprises a step of measuring the liquid level in the degassing tank (11) and a step of controlling the intake pressure of the cryogenic pump (6) so as to maintain a set level of liquid in the degassing tank (11).

13. Method according to claim 12, **characterised in that** it comprises a step of increasing the intake pressure of the pump (6) when the liquid level measured in the degassing tank (11) is below a first set datum level and a step of decreasing the intake pressure of the pump (6) when the liquid level measured in the degassing tank (11) is below a second set datum level which is different from or equal to the first datum level.
